# EUROPEAN PATENT APPLICATION

(11) **EP 4 625 017 A1**
(43) Date of publication of application: **01.10.2025**
(21) Application number: 25157922.3
(22) Date of filing: 14.02.2025
(51) Int. Cl.: G02B 6/44

(54) **EASY-ACCESS FLAT DROP CABLE**

(30) Priority: 28.03.2024 US 202463570875 P; 13.06.2024 US 202418742160
(71) Applicant: Prysmian S.p.A., 20126 Milano (IT)
(72) Inventor: BARKER, Jeffrey Scott, Milano (IT); COLTON, Brian, Milano (IT); WELLS, Ben H., Milano (IT)
(74) Representative: Algemeen Octrooi- en Merkenbureau B.V.

(57) **Abstract**

An exemplary flat drop cable (10) includes a polymeric cable jacket (11) that defines an angular longitudinal cavity (12) having an upper vertex (13a) and a lower vertex (13b), such as a rhombus-like cross-sectional shape with distinctive upper and lower vertices. One or more optical fibers (14) are positioned lengthwise within the angular longitudinal cavity (12), and typically two parallel strength members (15a,15b) are embedded in the polymeric cable jacket (11) opposite one another relative to the angular longitudinal cavity (12). The distinctive upper and lower vertices (13a,13b) reduce the polymeric jacketing (11) above and below the angular longitudinal cavity, which facilitates hand tearing of the cable jacket (11) to access the one or more optical fibers (14).

## Description

### CRoss-REFERENCE TO PRIORITY APPLICATION

This application hereby claims the benefit of pending U.S. Patent Application No. 63/570,875 for an Easy-Access Flat Drop Cable (filed March 28, 2024), which is hereby incorporated by reference in its entirety.

### FIELD OF THE INVENTION

The present invention relates to flat optical-fiber drop cables.

### BACKGROUND

Optical fibers provide advantages over conventional communication lines. As compared with traditional wire-based networks, optical-fiber communication networks can transmit significantly more information at significantly higher speeds. The amount of data transmitted over optical-fiber cables is continuously increasing worldwide.

Fiber to the premises/business/home (i.e., FTTx) provides broadband data transfer technology to the individual end-user. FTTx installations, which are being increasingly deployed throughout the world, are making use of innovative, reduced-cost system designs to promote the spread of the technology. Within a fiber optic network, drop cables spanning short distances are often used to provide an end connection to a network subscriber. Drop cables, which typically terminate at a home or business, are often important components of FTTx installations.

### SUMMARY

Accordingly, in one aspect, the present invention embraces flat drop cables deploying one or more optical fibers (e.g., a single-mode optical fiber or a multimode optical fiber.)

An exemplary flat drop cable includes a polymeric cable jacket that defines an angular longitudinal cavity having an upper vertex and a lower vertex, such as a diamond-like cross-sectional shape with distinctive upper and lower vertices. One or more optical fibers are positioned lengthwise within the angular longitudinal cavity, and typically two parallel strength members are embedded in the polymeric cable jacket opposite one another relative to the angular longitudinal cavity. The upper and lower vertices (e.g., distinctive internal notches) reduce the polymeric jacketing above and below the one or more optical fibers (e.g., a single tightly buffered optical fiber), which facilitates hand tearing of the polymeric cable jacket in order to access the one or more optical fibers in the flat drop cable for splicing and/or connectorization.

The foregoing illustrative summary, other objectives and/or advantages of the present disclosure, and the manner in which the same are accomplished are further explained within the following detailed description and its accompanying drawings.

### BRIEF DESCRIPTION OF THE DRAWINGS

The present invention is described hereinafter with reference to the accompanying drawings in which embodiments of the present invention are shown and in which like reference numbers indicate the same or similar elements. The drawings are provided as examples, may be schematic, and may not be drawn to scale. The present inventive aspects may be embodied in many different forms and should not be construed as limited to the examples depicted in the drawings.
Figures 1-2 depict in respective views an exemplary flat drop cable in accordance with an embodiment of this disclosure.
Figure 3 is a cross-sectional photograph of a prototypical flat drop cable in accordance with an embodiment of this disclosure.
Figures 4-5 depict in respective views an exemplary flat drop cable in accordance with an alternative embodiment of this disclosure.

### DETAILED DESCRIPTION

Various aspects and features are herein described with reference to the accompanying figures. Details are set forth to provide a thorough understanding of the present disclosure. It will be apparent, however, to those having ordinary skill in the art that the disclosed optical-fiber cables may be practiced or performed without some or all of these specific details. As another example, features disclosed as part of one embodiment can be used in another embodiment to yield a further embodiment. Sometimes well-known aspects are not described in detail to avoid unnecessarily obscuring the present disclosure. This detailed description is thus not to be taken in a limiting sense, and it is intended that other embodiments are within the spirit and scope of the present disclosure.

In a first aspect, the invention embraces flat drop cables deploying one or more optical fibers, such as single-mode optical fibers or multimode optical fibers. Exemplary flat drop cables may be deployed aerially or within ductwork, or directly buried into the ground.

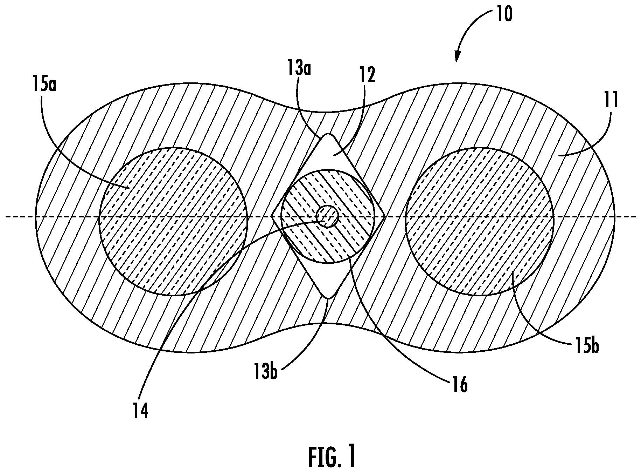

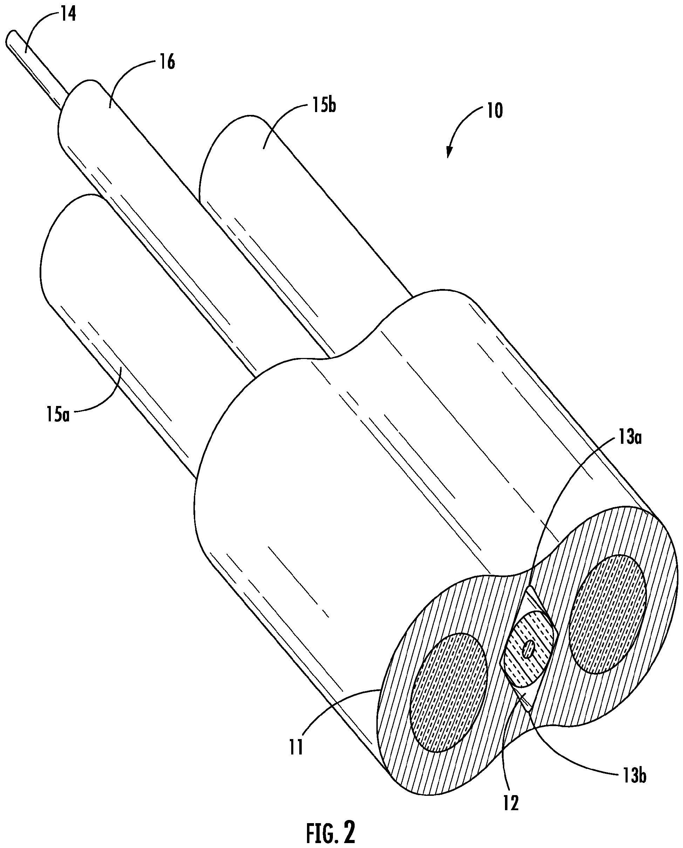

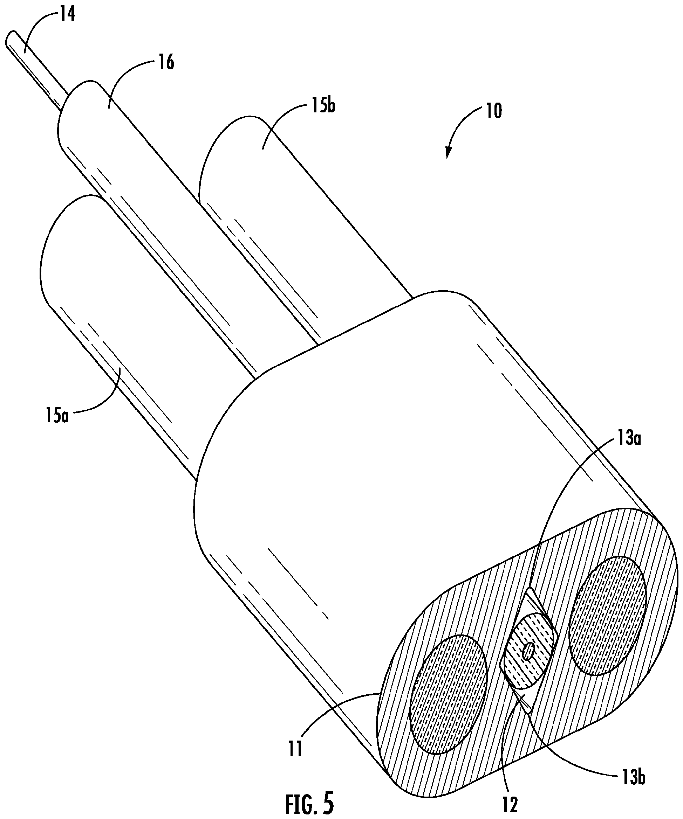

An exemplary flat drop cable 10, such as those depicted in Figures 1-5, includes a polymeric cable jacket 11 that defines an angular longitudinal cavity 12 having an upper vertex 13a and a lower vertex 13b. One or more optical fibers 14, which extend in a longitudinal direction, are positioned within the angular longitudinal cavity 12, and two strength members 15, which likewise extend in a longitudinal direction, are positioned opposite one another relative to the angular longitudinal cavity 12. For example, as depicted in each of Figures 1-5, a first strength member 15a may be enclosed within the polymeric cable jacket 11 on one side of the angular longitudinal cavity 12, and a second strength member 15b may be enclosed within the polymeric cable jacket 11 on the other side of the angular longitudinal cavity 12. Typically, each strength member 15 is encapsulated or otherwise embedded within the polymeric cable jacket 11.

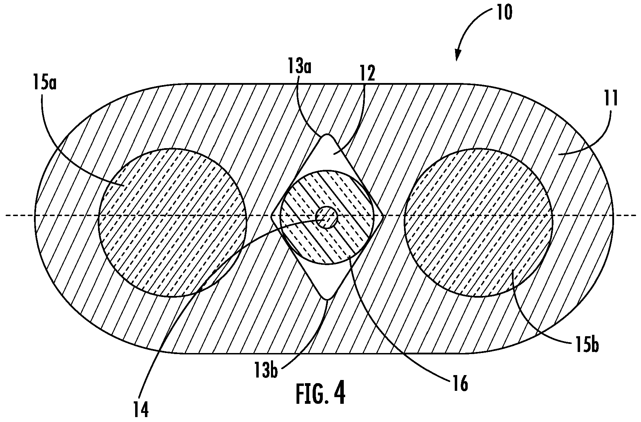

The angular longitudinal cavity 12, which extends in a longitudinal direction for at least a portion of the flat drop cable's longitudinal length, is typically substantially centrally positioned within the polymeric cable jacket 11 (e.g., positioned within the middle portion of the flat drop cable 10). In an exemplary embodiment, the flat drop cable 10 has a major transverse axis (e.g., a side-to-side axis) extending through the first radial strength member 15a, the longitudinal angular cavity 12, and the second radial member 15b, such that the angular longitudinal cavity's upper vertex 13a is above the major transverse axis and the angular longitudinal cavity's lower vertex 13b is below the major transverse axis. See Figure 1 and Figure 4.

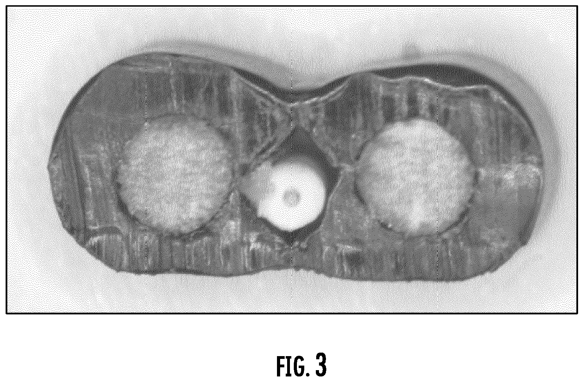

In an exemplary embodiment of the flat drop cable, the angular longitudinal cavity has a quadrilateral-like cross-sectional shape (e.g., the angular longitudinal cavity has four distinctive sides, four angles, and four vertices). In another exemplary embodiment of the flat drop cable, the angular longitudinal cavity has a rhombus-like cross-sectional shape (e.g., the angular longitudinal cavity has four distinctive sides of equal length, wherein the opposite sides of the angular longitudinal cavity are substantially parallel to each other). This exemplary embodiment appears as a diamond-like cross-sectional shape with distinctive upper and lower vertices, such as depicted in Figure 3, a prototypical flat drop cable.

The upper and lower vertices (e.g., acute-angled internal notches) reduce the polymeric jacketing (e.g., polyolefin jacketing) above and below the one or more optical fibers, which permits the cable jacket to be easily torn by hand to access the one or more optical fibers. Without being bound by any theory, it is thought that the upper and lower vertices (e.g., the internal V-shaped notches) create stress concentrators during hand tearing of the cable jacket (e.g., manual tearing adjacent to the one or more optical fibers positioned within the angular longitudinal cavity).

Conventional optical-fiber drop cables sometimes employ external recesses, such as notches or grooves, on the outside of the optical-fiber drop cables to encourage preferential tearing or stripping. Such conventional designs, however, are disadvantageous. For example, the external recesses (e.g., outside notches or outside grooves) make it more difficult to seal the optical-fiber cable as it enters a splice box or other enclosure. Moreover, if stress from external forces is applied at an external recess (e.g., an outside notch or an outside groove), the optical-fiber cable may inadvertently split or otherwise fail, which can expose the optical fiber and introduce undesirable optical-fiber attenuation.

Other conventional optical-fiber drop cables sometimes position a yarn, cord, or plastic component within the polymeric jacketing (e.g., embedded discontinuities), such as adjacent the optical fibers (e.g., above and below the optical fibers) to encourage preferential tearing or stripping. Typically, the yarn or plastic component is selected to discourage bonding with the polymeric jacket. The inclusion of such access components (e.g., embedded yarns or cords) tends to increase manufacturing complexity and cost.

An exemplary flat drop cable has a substantially flattened geometry that defines a relatively narrow height (e.g., 2.5-3.5 millimeters, such as about 2.8 millimeters), a relatively wide width (e.g., 5.0-8.0 millimeters, such as about 6.0 millimeters), and a substantially continuous length (e.g., over 1,000 meters, such as 2,000 meters or more). As measured at its maximum width and at its maximum height, the flat drop cable typically has a width-to-height ratio of at least 3:2, more typically at least 2:1 (e.g., a prototypical flat drop cable depicted in Figure 3 is approximately 6 millimeters x 2.8 millimeters).

In an exemplary embodiment depicted in Figures 1-3, the flat drop cable has rounded ends, which comport with or otherwise reflect the shape of the radial strength members, and concave upper and lower sides (e.g., substantially smooth, concave upper and lower major surfaces). The concave sides inherently reduce the amount of polymeric jacketing adjacent to the angular longitudinal cavity's upper and lower vertices, which facilitates hand opening of the flat drop cable. The concave major surfaces also facilitate deployment of the flat drop cable into ductwork. In another exemplary embodiment depicted in Figures 4-5, the flat drop cable has rounded ends, which comport with or otherwise reflect the shape of the radial strength members, and substantially flat upper and lower sides (e.g., substantially smooth, substantially flat upper and lower major surfaces). The flatter sides provide more polymeric jacketing adjacent to the angular longitudinal cavity's upper and lower vertices.

In an exemplary embodiment of the flat drop cable, at both the upper and lower vertices of the angular longitudinal cavity, the thickness of the polymeric cable jacket is less than 800 microns, such as between about 200 microns and 600 microns. In another exemplary embodiment of the flat drop cable, at both the upper and lower vertices of the angular longitudinal cavity, the thickness of the polymeric cable jacket is less than about 550 microns, such as between about 300 microns and 500 microns or between about 250 microns and 450 microns. By way of further non-limiting example, at the cross-sectional cable portion depicted in Figure 3, a prototypical flat drop cable has a polymeric jacket thickness of about 450 microns above the angular longitudinal cavity's upper vertex and a polymeric jacket thickness of about 340 microns below the angular longitudinal cavity's lower vertex.

As used herein, a flat drop cable, such as depicted in Figures 1-5, inherently defines an upper side (e.g., the top portion), a lower side (e.g., the bottom portion), a left edge, and a right edge. The respective upper and lower sides define the major surfaces of the flat drop cable. Those having ordinary skill in the art will appreciate that flipping the flat drop cable 180 degrees over its major transverse axis will reverse the top and bottom, and so the terms can sometimes be used interchangeably herein depending on the frame of reference and context. Similarly, those having ordinary skill in the art will appreciate that yaw rotating the flat drop cable 180 degrees will reverse the right edge and left edge, and so the terms can sometimes be used interchangeably herein depending on the frame of reference and context. Accordingly, as used herein, terms and descriptions such as "first major surface" and "second, opposite major surface" refer to the respective upper and lower sides of the flat drop cable, or vice versa depending on the frame of reference and context.

As noted, one or more optical fibers are positioned within the angular longitudinal cavity, typically within a buffer tube. For example, a buffer tube loosely enclosing one or more optical fibers is loosely positioned within the angular longitudinal cavity (e.g., freely positioned within an angular longitudinal cavity having a rhombus-like cross-sectional shape). An exemplary buffer tube might have an outer diameter of about 1,100 microns or less (e.g., between about 800 microns and 1,100 microns), such as 1,000 microns or less (e.g., between about 700 microns and 1,000 microns). In the exemplary embodiments depicted in Figures 1-5, a tight buffer tube 16 closely or tightly enclosing exactly one optical fiber 14 (e.g., a tightly buffered optical fiber) is loosely positioned within the angular longitudinal cavity 12, and such an exemplary tight buffer tube 16 might have an outer diameter of 900 microns or less (e.g., between about 500 microns and 900 microns).

In an exemplary embodiment, each optical fiber has a diameter d of between 240 microns and 260 microns, more typically about 250 microns. Alternatively, the optical fibers may have a reduced diameter d, such as between about 180 microns and 230 microns (e.g., nominal 200-micron optical fibers). Optical fibers usually include a component glass fiber and one or more surrounding coating layers. Those having ordinary skill in the art will understand the various kinds of primary coatings, secondary coatings, and ink layers, as well as the structures and thicknesses thereof. This application hereby incorporates by reference commonly owned U.S. Patent No. 8,265,442 for a *Microbend-Resistant Optical Fiber* and U.S. Patent No. 8,600,206 for a *Reduced-Diameter Optical Fiber.*

A water-swellable element, such as a water-swellable yarn or a water-swellable tape, is typically positioned within the angular longitudinal cavity. For instance, a water-swellable yarn is positioned within the angular longitudinal cavity (and adjacent the tightly buffered optical fiber) as shown in Figure 3, a prototypical flat drop cable.

Typically, each of the first and second reinforcing members has a cross-sectional area that is greater than the cross-sectional area of the angular longitudinal cavity, whereby the ratio of the average cross-sectional area of the first and second radial strength members to the cross-sectional area of the angular longitudinal cavity is greater than 1 (e.g., 1.1-1.3). More typically, the ratio of the average cross-sectional area of the two radial strength members to the cross-sectional area of said angular longitudinal cavity is 1.1 or greater, such as 1.15 or greater (e.g., about 1.2-1.3). In some exemplary embodiments, the ratio of the average cross-sectional area of the two radial strength members to the cross-sectional area of said angular longitudinal cavity is 1.25 or greater, such as 1.5 or greater (e.g., about 1.6-1.8). By way of further non-limiting example, at a cross-sectional cable portion such as depicted in Figure 3, a prototypical flat drop cable has two radial strength members each having a diameter of about 1.4 millimeters (e.g., between about 1.4 millimeters and 1.6 millimeters), and the angular longitudinal cavity has a vertex-to-vertex height (i.e., the longer diagonal) of about 2.0 millimeters and a vertex-to-vertex width (i.e., the shorter diagonal) of about 1.25 millimeters.

As noted, within a fiber optic network, drop cables often span short distances to provide an end connection to a network subscriber. Drop cables, which typically terminate at a home or business, are critical components of fiber optic deployments (e.g., FTTx installations), such as fiber-to-the-home (FTTH). It is desirable for drop cables to be small and flexible while also being sufficiently robust to provide a reliable connection to end users (e.g., network subscribers). Exemplary drop cables may include an angular longitudinal cavity surrounded by a flat, polymeric cable jacket (e.g., a flat polymeric sheath). Such cable jackets typically contain one or more embedded strength elements, such as two parallel strength elements positioned on opposite sides of the angular longitudinal cavity. One or more optical fibers are positioned within the angular longitudinal cavity, typically within a buffer tube (e.g., a tightly buffered optical fiber). The dimensions of the angular longitudinal cavity and of all of the surrounding cable components are typically selected so as to resist undue mechanical forces upon the optical fiber(s) during drop-cable installation and use (e.g., deployed aerially and/or within ductwork).

The cable jacketing (e.g., the cable sheath) may be a formed from a dielectric material, such as polyethylene, polypropylene, polyvinyl chloride (PVC), polyamides (e.g., nylon), polyester (e.g., PBT), fluorinated plastics (e.g., perfluoroethylene propylene, polyvinyl fluoride, or polyvinylidene difluoride), and/or ethylene vinyl acetate. The jacketing materials may also contain other additives, such as nucleating agents, flame-retardants, smoke-retardants, antioxidants, UV absorbers, and/or plasticizers.

As depicted in Figures 1-5, an exemplary flat drop cable typically includes one or more strength members, typically two strength members positioned opposite one another relative to a substantially centrally positioned, angular longitudinal cavity. The strength members may be formed, for example, from a nonmetallic material (e.g., glass reinforced plastic (GRP)). Alternatively, the strength members may be formed from a metal (e.g., steel). It is possible to reduce the size of the strength members to reduce the relative dimensions of the drop cable.

A tight buffer tube, which is positioned within the angular longitudinal cavity, may be formed from polyolefins (e.g., polyethylene, polypropylene, or blends thereof), including fluorinated polyolefins, polyesters (e.g., polybutylene terephthalate), polyamides (e.g., nylon), as well as other polymeric materials and polymeric blends, such as elastomers and thermoplastics (e.g., polyvinyl chloride), and may or may not be foamed. The buffer materials may also contain other additives, such as nucleating agents, flame-retardants, smoke-retardants, antioxidants, UV absorbers, and/or plasticizers.

The present flat drop cables may further include a lubricant, an internal and/or external toning portion, water-blocking components, strength yarns, and/or ripcords. As noted, and as depicted in Figures 1-3, one or more of the major surfaces of the exemplary flat drop cables may be concave, which facilitates feeding such flat drop cables into ducts and accessing the optical fibers contained in such flat drop cables.

To supplement the present disclosure, this application incorporates entirely by reference the following commonly assigned patents: U.S. Patent No. 7,623,747 for a *Single Mode Optical Fiber;* U.S. Patent No. 7,889,960 for a *Bend-Insensitive Single-Mode Optical Fiber;* U.S. Patent No. 8,145,025 for *a Single-Mode Optical Fiber Having Reduced Bending Losses;* U.S. Patent No. 8,265,442 for *a Microbend-Resistant Optical Fiber;* U.S. Patent No. 8,600,206 for a *Reduced-Diameter Optical Fiber;* U.S. Patent No. 6,493,491 for an *Optical Drop Cable for Aerial Installation;* U.S. Patent No. 8,031,997 for *a Reduced-Diameter, Easy-Access Loose Tube Cable;* U.S. Patent No. 8,081,853 for *Single-Fiber Drop Cables for MDU Deployments;* U.S. Patent No. 8,145,026 for a *Reduced-Size Flat Drop Cable.*

Other variations of the disclosed embodiments can be understood and effected by those of ordinary skill in the art in practicing the present invention by studying the drawings, the disclosure, and the appended claims. In the claims, the word "comprising" does not exclude other elements or steps, and the indefinite article "a" or "an" does not exclude a plurality. Unless otherwise specified, numerical ranges are intended to include the endpoints.

It is within the scope of this disclosure for one or more of the terms "substantially," "about," "approximately," and/or the like, to qualify each adjective and adverb of the foregoing disclosure, to provide a broad disclosure. As an example, it is believed those of ordinary skill in the art will readily understand that, in different implementations of the features of this disclosure, reasonably different engineering tolerances, precision, and/or accuracy may be applicable and suitable for obtaining the desired result. Accordingly, it is believed those of ordinary skill will readily understand usage herein of the terms such as "substantially," "about," "approximately," and the like.

The use of the term "and/or" includes any and all combinations of one or more of the associated listed items. Descriptions of the exemplary optical-fiber cables typically embrace representative, longitudinal portions of the corresponding optical-fiber cables. The figures are schematic representations and so are not necessarily drawn to scale. Unless otherwise noted, specific terms have been used in a generic and descriptive sense and not for purposes of limitation.

While various aspects, features, and embodiments have been disclosed herein, other aspects, features, and embodiments will be apparent to those having ordinary skill in the art. The various disclosed aspects, features, and embodiments are for purposes of illustration and are not intended to be limiting. It is intended that the scope of the present invention includes at least the following claims and their equivalents:

## Claims

1. A flat drop cable, comprising:
a polymeric cable jacket, said cable jacket defining an angular longitudinal cavity having an upper vertex and a lower vertex;
one or more optical fibers positioned within the angular longitudinal cavity and extending in a longitudinal direction; and
first and second radial strength members enclosed within said cable jacket and extending in a longitudinal direction, wherein said strength members are positioned opposite one another relative to the angular longitudinal cavity.

2. The flat drop cable according to Claim 1, wherein:
the flat drop cable has a major transverse axis extending through the first radial strength member, the longitudinal angular cavity, and the second radial member; and
the angular longitudinal cavity's upper vertex is above the major transverse axis and the angular longitudinal cavity's lower vertex is below the major transverse axis.

3. The flat drop cable according to any one or more of the preceding claims, wherein the flat drop cable has a width-to-height ratio of at least 3:2.

4. The flat drop cable according to any one or more of the preceding claims, wherein the angular longitudinal cavity is substantially centrally positioned within said cable jacket.

5. The flat drop cable according to any one or more of the preceding claims, wherein the angular longitudinal cavity has a rhombus-like cross-sectional shape.

6. The flat drop cable according to any one or more of the preceding claims, wherein said two strength members are encapsulated or otherwise embedded within said cable jacket.

7. The flat drop cable according to any one or more of the preceding claims, wherein, at both the upper and lower vertices of the angular longitudinal cavity, the thickness of the cable jacket is less than 800 microns, especially wherein, at both the upper and lower vertices of the angular longitudinal cavity, the thickness of the cable jacket is between 200 microns and 600 microns.

8. The flat drop cable according to any one or more of the preceding claims, wherein at least one of said one or more optical fibers is chosen from a single-mode optical fiber and a multimode optical fiber.

9. The flat drop cable according to any one or more of the preceding claims, comprising a buffer tube positioned within the angular longitudinal cavity and loosely enclosing said one or more optical fibers, especially wherein said buffer tube is loosely positioned within the angular longitudinal cavity.

10. The flat drop cable according to Claim 9, wherein said buffer tube has an outer diameter of 1,100 microns or less.

11. The flat drop cable according to any one or more of claims 1-8, comprising a tight buffer tube loosely positioned within the angular longitudinal cavity and enclosing exactly one optical fiber, especially wherein said tight buffer tube has an outer diameter of 900 microns or less.

12. The flat drop cable according to any one or more of the preceding claims, comprising a water-swellable element positioned within the angular longitudinal cavity.

13. The flat drop cable according to any one or more of the preceding claims, wherein each of said first and second strength members has a cross-sectional area that is greater than the cross-sectional area of the angular longitudinal cavity, especially wherein the ratio of the average cross-sectional area of said two radial strength members to the cross-sectional area of said angular longitudinal cavity is 1.15 or greater.

14. An FTTx installation comprising one or more flat drop cables according to any one or more of the preceding claims.

15. The FTTx installation according to Claim 14, wherein at least one of said one or more flat drop cables comprises a polymeric cable jacket defining an angular longitudinal cavity with a rhombus-like cross-sectional shape.
